(19) Europäisches Patentamt / European Patent Office / Office européen des brevets

(11) **EP 3 364 035 B1**

(12) **EUROPEAN PATENT SPECIFICATION**

(45) Date of publication and mention
of the grant of the patent:
**14.08.2024 Bulletin 2024/33**

(21) Application number: **18156836.1**

(22) Date of filing: **15.02.2018**

(51) International Patent Classification (IPC):
**F04C 28/06** (2006.01)  **F04C 28/08** (2006.01)
**F04C 28/28** (2006.01)  **F04C 18/16** (2006.01)

(52) Cooperative Patent Classification (CPC):
**F04C 28/08; F04C 28/06; F04C 28/28;** F04C 18/16;
F04C 2270/05; F04C 2270/48; F04C 2270/60

(54) **DEVICE AND METHOD FOR CONTROLLING SPEED OF A ROTARY AIR COMPRESSOR, AND A VEHICLE COMPRISING THE DEVICE**

VORRICHTUNG UND VERFAHREN ZUR STEUERUNG DER DREHZAHL EINES DREHLUFTKOMPRESSORS UND FAHRZEUG MIT DER VORRICHTUNG

DISPOSITIF ET PROCÉDÉ POUR COMMANDER LA VITESSE D'UN COMPRESSEUR D'AIR ROTATIF ET VÉHICULE COMPRENANT LE DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2017 SE 1750165**

(43) Date of publication of application:
**22.08.2018 Bulletin 2018/34**

(73) Proprietor: **Scania CV AB**
**151 87 Södertälje (SE)**

(72) Inventor: **KHORSHIDI, Ali**
**141 68 Huddinge (SE)**

(74) Representative: **Scania CV AB**
**Patents, GP 117kv**
**151 87 Södertälje (SE)**

(56) References cited:
EP-A1- 2 708 429      EP-A1- 3 015 328
WO-A1-2015/082430      WO-A1-2018/054878

EP 3 364 035 B1

**Description**

Technical field

The present disclosure relates to technology relating to air compressors in vehicles, and more specifically to a device and a method for controlling an air compressor that is driven by an electrical motor in the vehicle and arranged to provide compressed air to a pneumatic system of the vehicle. The disclosure also relates to a vehicle comprising the device, a computer program and a computer program product.

Background

In a heavy vehicle, compressed air is provided to a plurality of pneumatically operated systems to be used e.g. for braking, parking, air suspension, for the trailer or for other accessory systems. Traditionally, a compressor powered by the combustion engine of the vehicle takes air from the outside of the vehicle and generates compressed air to the various systems according to demand.

For hybrid and electric vehicles, a rotary air compressor is advantageously used to provide compressed air due to the low noise level and high free air delivery. These functionalities are useful for example to be able to drive in noise restriction zones in cities. In such vehicles, the rotary air compressor is driven by an electric motor of the vehicle. Examples of rotary air compressors are screw compressors and vane compressors.

The rotary air compressors have a limitation in that they require a minimum duty cycle in order to avoid condensation inside their compressor housing. The duty cycle may be defined as the amount of compressor activation time of the total driving time of the vehicle. In some vehicles, e.g. in distribution hybrid trucks and long haulage hybrid trucks, the air consumption is not significant, and thus the duty cycle is low. In other hybrid vehicles e.g. refuse collector trucks or articulated buses, the air consumption rate may be higher than the free air delivery of an electric air compressor when it is set to a nominal speed.

EP3015328A1, EP2708429A1, WO2015/082430A1 disclose control devices for a rotary air compressor.

Summary

It is an object of the invention to facilitate use of a rotary air compressor for air compression in a hybrid or electrical vehicle. It is another object of the invention to prolong the life-span of the rotary air compressor. It is a further object of the invention to provide enough compressed air according to demand while allowing time for regeneration of the total air system. These objects and others are at least partly achieved by the method, device and vehicle according to the independent claims, and by the embodiments according to the dependent claims.

According to a first aspect, the invention relates to a control device for a rotary air compressor of an air system of a vehicle, wherein the rotary air compressor is arranged to be driven by an electric motor. The control device comprises a control unit configured to: determine a duty cycle of the rotary air compressor, determine speed control data of the rotary air compressor based on the determined duty cycle according to a predetermined rule; and control the speed of the rotary air compressor based on the determined speed control data.

With the control device, it is possible to secure a minimum duty cycle of the electric air compressor and thus avoid the risk of condensation inside the compressor housing. Thereby, the use of a rotary air compressor to compress air is facilitated, and noise restrictions for vehicles can be more easily met. Further, by using the control device the life-time of the rotary air compressor will not be reduced because of condensation.

According to some embodiments, the control unit is configured to obtain data indicating a vehicle running time period during which the vehicle is running and obtain data indicating a portion of the vehicle running time period during which the rotary air compressor is active. The control unit is further configured to determine a total time of the vehicle running time period during which the rotary air compressor is active based on the obtained data and to determine the duty cycle based on the vehicle running time period and the total time.

According to the invention the predetermined rule comprises a lower limit for the duty cycle, and the control unit is configured to determine whether the duty cycle is less than the limit. Upon determining that the duty cycle is less than the limit, the control unit is configured to determine speed control data indicating a speed of the rotary air compressor that is lower than a preset regular operating speed of the rotary air compressor.

According to some embodiments, the control unit is configured to determine whether the duty cycle is above a lower limit and below an upper limit, or equal to any of the lower limit or upper limit, and upon determining that the duty cycle is above the lower limit and below the upper limit, or equal to any of the lower limit or upper limit, the control unit is configured to determine speed control data indicating the preset regular operating speed of the rotary air compressor.

According to some embodiments, the predetermined rule comprises an upper limit for the duty cycle, wherein the control unit is configured to determine whether the duty cycle is above the limit. Upon determining that the duty cycle is above the limit, the control unit is configured to determine speed control data indicating a speed of the rotary air compressor that is higher than a preset regular operating speed of the rotary air compressor.

According to some embodiments, the control unit is configured to obtain an air consumption rate of the vehicle, and obtain a produced air rate of the air system. The control unit is further configured to determine whether the air consumption rate of the vehicle is higher than the produced air rate, and upon determining that the air consumption rate of the vehicle is higher than the produced air rate, the control unit is configured to determine speed control data indicating a speed of the rotary air compressor that is higher than a preset regular operating speed of the rotary air compressor.

According to a second aspect, the invention relates to a vehicle comprising an air system and a control device according to any of the method steps herein, and wherein the control unit is configured to control speed of an electric rotary air compressor of the air system.

According to a third aspect, the invention relates to a method for controlling speed of an electric motor driven rotary air compressor comprised in an air system of a vehicle. The method comprises determining a duty cycle of the rotary air compressor, determining speed control data of the rotary air compressor based on the determined duty cycle according to a predetermined rule, and controlling the speed of the rotary air compressor based on the determined speed control data.

The same positive effects achieved by the control device may be achieved by the method.

According to some embodiments, the determining comprises determining a vehicle running time period during which the vehicle is running, determining a total time of the determined vehicle running time period during which the rotary air compressor is active and determining the duty cycle based on the vehicle running time period and the total time. Thus, the duty cycle of the rotary air compressor can be determined.

According to the invention, the predetermined rule comprises a lower limit for the duty cycle, wherein the method comprises determining whether the duty cycle is less than the limit, and upon determining that the duty cycle is less than the limit, determining speed control data indicating a speed of the rotary air compressor that is lower than a preset regular operating speed of the rotary air compressor. Thus, the duty cycle may be prolonged by running the rotary air compressor with lower speed for low air consuming vehicle applications.

According to some embodiments, the method comprises determining whether the duty cycle is above a lower limit and below an upper limit, or equal to any of the lower limit or upper limit, and upon determining that the duty cycle is above the lower limit and below the upper limit, or equal to any of the lower limit or upper limit, the method comprises determining speed control data indicating the preset regular operating speed of the rotary air compressor. Thus, if the duty cycle is within a certain interval, the rotary air compressor should be run with a preset regular operating speed.

According to some embodiments, the predetermined rule comprises an upper limit for the duty cycle, wherein the method comprises determining whether the duty cycle is above the limit, and upon determining that the duty cycle is above the limit, the method comprises determining speed control data indicating a speed of the rotary air compressor that is higher than a preset regular operating speed of the rotary air compressor. Thus, by the method it is possible to also compensate the high air consumption rate by running the rotary air compressor at a higher speed. The duty cycle will then be reduced and there will be enough time for regeneration.

According to some embodiments, the method comprises determining whether an air consumption rate of the vehicle is higher than a produced air rate of the air system, and upon determining that the air consumption rate of the vehicle is higher than the produced air rate of the air system, determining speed control data indicating a speed of the rotary air compressor that is higher than a preset regular operating speed of the rotary air compressor. Thus, by the method it is possible to increase the air pressure such that more compressed air will be produced in order to meet the demand.

According to a fourth aspect, the invention relates to a computer program P, wherein the computer program P comprises a computer program code which, when executed by a control device, causes the control device to perform the method according to any of the method steps herein.

According to a fifth aspect, the invention relates to a computer program product comprising a computer program code which, when executed by a control device, causes the control device to perform any of the method steps as disclosed herein.

Brief description of the drawings

Fig. 1 illustrates a vehicle arranged to be driven by an electrical motor, and a device according to some embodiments implemented in the vehicle.
Fig. 2 illustrates an air system of the vehicle of Fig. 1 according to some embodiments of the disclosure.
Fig. 3 illustrates a flow chart of a method according to some embodiments of the disclosure.

Detailed description

Rotary air compressors, e.g. screw and vane compressors, thus have some limitation regarding minimum duty cycle in order to avoid condensation risk inside the compressor housing. The duty cycle is here defined as a total time the compressor is active during a vehicle running time period, divided by the vehicle running time period of the vehicle 1. A minimum duty cycle for rotary air compressors is for example 30%. If the vehicle running time period is 15 minutes, then the rotary air compressor should have been activated for at least 30% of that time in order to avoid condensation.

As a rotary air compressor often is continuously run at a preset regular operating speed when active, there is a risk that the duty cycle becomes lower than 30% when not much compressed air is used. Also, when much compressed air is used, there is a risk that the pressure in compressed air tanks that accumulates the compressed air from the rotary air compressor will go below a lower threshold limit. The preset regular operating speed is typically chosen within an interval where the rotary air compressor is most efficient, i.e. it produces the most compressed air with minimum power. In the following a speed control method and a control device for controlling speed of a rotary air compressor such that condensation can be avoided will be described. However, first a vehicle and an air system where the method and device may be implemented will be explained with reference to the figures.

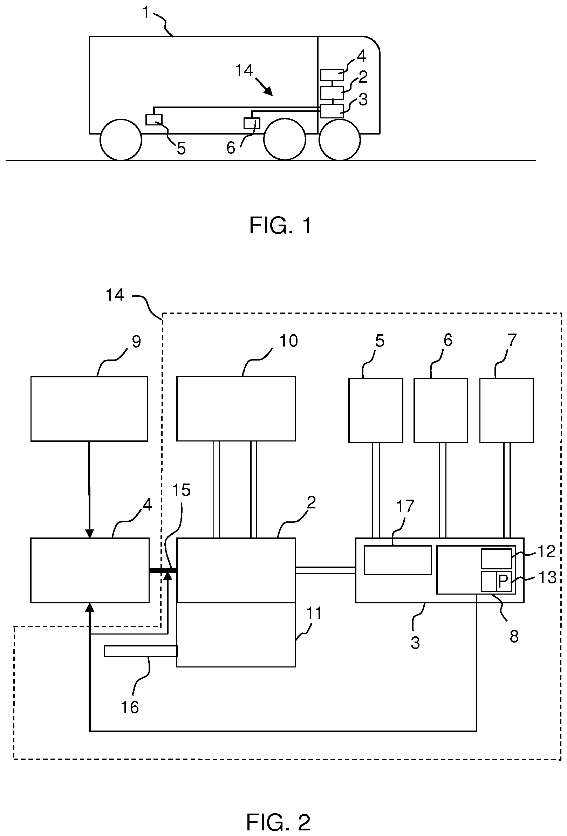

A hybrid vehicle is here defined to be arranged with at least two different propelling alternatives, for example a combustion engine and an electrical motor. It is then possible to switch between the propelling alternatives. For example, when driving in a city the electrical motor could be used to propel the vehicle in order to meet demands on low emission and low noise regulations in certain city zones. The hybrid vehicle comprises one or several batteries to power the electrical motor. An electrical vehicle is here defined to be arranged with one or several electrical motor for propelling the vehicle. The electrical vehicle can only be propelled by the electrical motor or motors, which are powered by one or several batteries in the vehicle. In Fig. 1 a vehicle 1 is illustrated that could be any of a hybrid vehicle or electrical vehicle.

The vehicle 1 comprises a plurality of pneumatically operating systems, for example one or several of a braking system (e.g. a rear braking system and a front braking system), a parking system, an air suspension system, a system for an attached trailer or for other accessory systems (not shown). Each pneumatically operating system is supplied with compressed air from an air tank. The air tank may be arranged with a pressure sensor in order to sense the pressure in the tank. Typically, each pneumatically operating system is in fluid communication with a separate air tank. The vehicle 1 in Fig. 1 is arranged with one air tank 5 arranged to supply compressed air to a rear braking system of the vehicle 1, and another air tank 6 arranged to supply compressed air to a front braking system of the vehicle 1. As understood, the vehicle 1 may be arranged with more air tanks for supplying other pneumatically operating systems in the vehicle 1.

The vehicle 1 further comprises a control device 3, a rotary air compressor 2 and an electrical motor 4. The rotary air compressor 2 is for example a screw compressor or a vane compressor. The electrical motor 4 provides power to the rotary air compressor 2 in order for the rotary air compressor 2 to compress air to the air tanks 5, 6. Thus, the rotary air compressor 2 is actuated by the electric motor 4 of the vehicle 1. The electrical motor 4 that is arranged to provide power to the rotary air compressor 2 may be the same electrical motor 4 that is arranged to propel the vehicle 1. Alternatively, the electrical motor 4 that is arranged to actuate the rotary air compressor 2 is another motor different from the electrical motor that is arranged to propel the vehicle 4. A transmission 15 (Fig. 2), e.g. gearbox, clutches etc. may be arranged to partitionate the torque from the electrical motor 4 between the drive shaft of the vehicle 1 (or other torque consuming application) and the rotary air compressor 2. The device 3 is configured to control speed of the electrical motor 4 and/or the transmission 15. The air tanks 5, 6, the device 3 and the rotary air compressor 2 are all parts of an air system 14 of the vehicle 1. However, in some embodiments the air system 14 may be arranged to supply the pneumatically driven systems directly with compressed air, without the compressed air first being accumulated in air tanks.

The air system 14 and connected parts are illustrated in more detail in Fig. 2. The air system 14 here additionally comprises an additional air tank 7, a cooling system 10 and a lubrication system 11. The additional air tank 7 is for example arranged to a parking brake system (not shown) of the vehicle 1. The pneumatic circuits are here not illustrated for brevity. However, the air system 1 may comprise more or less air tanks than illustrated in the figures.

A power supply 9 of the vehicle 1 (Fig. 1) is connected to electric motor 4 in order to supply power to the electrical motor 4. The power supply 9 comprises for example one or several batteries. The electrical motor 4 converts electrical energy into mechanical energy, and the mechanical energy is transferred to the rotary air compressor 2 via a transmission 15. The electrical motor 4 is arranged to be connected with an Electronic Control Unit, ECU, and arranged to be controlled by command from the ECU. The transmission 15 comprise an output shaft from the electrical motor 4. In some embodiments, the output shaft is directly coupled to the rotary air compressor 2. In other embodiments, the transmission comprises e.g. a gearbox, one or several clutches etc. in order to adapt the rotational speed or torque from the output shaft to an input shaft of the electrical motor 4. The transmission may thus be configured to adapt its rotational speed or torque according to demand. The transmission 15, e.g. the gearbox and/or one or several clutches, may be connected with an ECU, and arranged to be controlled by command from the ECU. The ECU arranged to control the electrical motor 4 may be the same or different from the ECU that is arranged to control the transmission 15, e.g. the gearbox and/or one or several clutches.

Air is taken in to the air system 14 from the outside of the vehicle 1 via an air intake 16, typically a pipe. The air intake 16 is connected to the rotary air compressor 2 and the lubrication system 11. When the rotary air compressor 2 is active, air is sucked into the air intake 16 and further to the rotary air compressor 2 by the under pressure produced by the action of the rotary air compressor 2. The lubrication system 11 is arranged to inject lubrication oil into the air of the air system 14, typically into the cavities of the rotary air compressor 2 before the air is compressed. The lubrication oil lubricates the air system 14 and removes heat generated by the rotary air compressor 2 when compressing the air. The lubrication oil also seal the air in the rotary air compressor 2. The mix of compressed air and lubrication oil is passed to an oil-air separator (not shown) of the lubrication system 11 downstream the rotary air compressor 2. The lubrication oil is here separated from the compressed air. The separated lubrication oil is passed via a pipe to the cooling system 10 where it is cooled down before it is passed via a return pipe to the rotary air compressor 2 and injected again into the air stream of the rotary air compressor 2. The separated compressed air is passed to the one or several tanks 5, 6, 7 via a valve system 17 and respective pipes. Before the compressed air is passed to the one or several tanks 5, 6, 7, the compressed air may be passed to the cooling system 10 in order to cool the compressed air. The compressed air is then passed via pipes to and from the cooling system 10. The valve system 17 is in some embodiments a part of the device 3. The illustrated rotary air compressor 2 is thus an oil injected rotary air compressor.

The valve system 17 controls the air flow into one or several air tanks 5, 6, 7. The valve system 17 comprises for example one valve for each air tank 5, 6, 7. Each valve is then arranged to close and open a flow into one of the air tanks 5, 6, 7. The valve system 17 may be electrically controlled from the control device 3. Typically the pressure in each tank 5, 6, 7 should be kept within an interval, the interval being limited by a lower threshold and an upper threshold. When the pressure in each tank is equal to the upper threshold, the rotary air compressor 2 is typically shut off, thus deactivated. The upper threshold may be e.g. between 10-15 bar, e.g. 12.5 bar. When the pressure in any tank 5, 6, 7 is lower than the lower threshold, then the rotary air compressor 2 is activated. The lower threshold is e.g. between 7-9 bar, e.g. 9 bar. The control device 3 may be arranged to control the rotary air compressor 2 based on the pressure in each tank 5, 6, 7, i.e. deactivate or activate the rotary air compressor 2. The valve system 17 may also include a security valve that is arranged to stop the flow of compressed air to all air tanks 5, 6, 7. The pressure in each tank 5, 6, 7 is measured with a respective pressure sensor arranged to measure the pressure in the respective tank 5, 6, 7.

The amount of compressed air is determined inter alia by the rotational speed of the rotary air compressor 2. The higher the rotational speed, the greater amount of compressed gas. The rotational speed of the rotary air compressor 2 may be determined or set by the output rotational speed of the electrical motor 4. Thus, by varying the speed of the electrical motor 4, the speed of the rotary air compressor 2 is correspondingly varied. Alternatively, the speed of the rotary air compressor 2 may be determined or set by the transmission 15. The speed of the rotary air compressor or electrical motor 4 may also be referred to as revolution speed.

The control device 3 comprises a control unit 8 comprising a processor 12 and a memory 13. The processor 12 may comprise at least one processing unit e.g. a Central Processing Unit (CPU). The memory 13 may comprise at least one memory unit. A memory unit may comprise a volatile and/or a non-volatile memory, such as a flash memory or Random Access Memory (RAM). The memory 13 further comprises a computer program P comprising computer program code configured to cause the control unit 8, or a computer connected to the control unit 8, to perform any of the method steps that will be described in the following. The computer program product comprises a computer program code stored on a non-transitory computer-readable medium to perform any of the method steps as disclosed herein when the computer program code is executed by the control unit 8 or by a computer connected to the control unit 8. The control device 3, and thus the control unit 8, is in some embodiments configured to control the speed of the rotary air compressor 2 such that the pressure in the tanks 5, 6, 7 is not outside the pressure interval.

The control unit 8 may be included into, or may itself be, an Electronic Control Unit (ECU) of the vehicle 1. The vehicle 1 communicates internally between its units, devices, sensors, detectors etc. via a communication bus, for example a CAN-bus (Controller Area Network) which uses a message based protocol. Examples of other communication protocols that may be used are TTP (Time-Triggered Protocol), Flexray, etc. In that way signals and data described herein may be exchanged between different units, devices, sensors and/or detectors in the vehicle 1. Signals and data may instead be transferred wirelessly between the different units, devices, sensors and/or detectors.

In order to avoid condensation, the control unit 8 is arranged to control the speed of the rotary air compressor 2 such that the minimum duty cycle can be met. In other words, such that the rotary air compressor 2 is driven a minimum percentage of the running time of the vehicle 1. For that purpose, the control unit 8 is configured to determine a duty cycle of the rotary air compressor 2. The duty cycle may already be available to the control unit 8 as it may have been determined in another control cycle. Optionally the duty cycle is determined as will be explained in the following. The control unit 8 is further configured to determine speed control data of the rotary air compressor 2 based on the determined duty cycle according to a predetermined rule. The predetermined rule is for example a table, one or several formulas or one or several conditions as will be more explained in the following. The predetermined rule takes one or several of the determined duty cycles as input. The predetermined rule results in speed control data that can be used or interpreted by the electrical motor 4 and/or the transmission 15 (via their common or respective ECU). The control unit 8 is further configured to control the speed of the rotary air compressor 2 based on the determined speed control data. For example, the control unit 8 may be configured to generate a control signal comprising the speed control data. The speed control data comprises for example a speed value, a speed interval or an indication to a speed value or speed interval of the rotary air compressor 2, e.g. in revolutions per minute (rpm). The control unit 8 is further arranged to provide the control signal to the electrical motor 4 and/or the transmission 15 (that is, to their common or respective ECU), whereby the speed of the rotary air compressor 2 is regulated in accordance with the speed control data of the control signal. Typically, the electrical motor 4 changes its rotational speed in accordance with the speed control data in order to change the speed of the rotary air compressor 2. Alternatively (or in combination with the electrical motor 4), the transmission 15 adapts its output rotational speed in accordance with the speed control data in order to change the speed of the rotary air compressor 2.

In embodiments where the duty cycle is not readily available, the control unit 8 is configured to determine the duty cycle by other means. According to such embodiments, the control unit 8 is configured to obtain data indicating a vehicle running time period during which the vehicle 1 is running. This data may for example be obtained by monitoring when the ignition of the vehicle 1 is on. Such ignition on/off data is normally distributed to all control units of the vehicle 1 via wired line or an internal communication network of the vehicle 1, e.g. the CAN-bus. The control unit 8 is further configured to obtain data indicating a portion of the vehicle running time period during which the rotary air compressor 2 is active. A portion is here the accumulated total time during which the rotary air compressor 2 is active during the vehicle running time period. The data for example indicates points in time when the rotary air compressor 2 is switched on or off. The control unit 8 is further configured to determine a total time of the vehicle running time period during which the rotary air compressor 2 is active based on the obtained data. As the control unit 8 also may be configured to start and stop the rotary air compressor 2 based on the monitored pressures in the tanks 5, 6, 7, the control unit 8 comprises data about when the rotary air compressor is active 2. By implementing a timer, the control unit 8 can determine a total time of the vehicle running time period during which the rotary air compressor 2 is active. The control unit 8 is further configured to determine the duty cycle based on the vehicle running time period and the total time.

For example, if the vehicle running time period is 15 minutes, a timer of the control unit 8 monitors when the rotary air compressor 2 is active during the 15 minutes, and accumulates the time when the rotary air compressor 2 is active to a total time, for example 10 minutes. To determine or calculate the duty cycle during the running time period, the total time is divided with the vehicle running time period, here: 10 minutes divided with 15 minutes, that is equal to 2/3. The duty cycle is thus approximately 67%. The control unit 8 may be configured to determine the duty cycle during a plurality of succeeding vehicle running time periods, for example two, three, four or five succeeding vehicle running time periods. The length of the vehicle running time period may be e.g. 5-20 minutes, e.g. 5, 10, 15 or 20 minutes.

Depending on the value of the duty cycle and the predetermined rule, the speed of the rotary air compressor 2 is differently set. In other words, the control unit 8 is configured to set the speed of the rotary air compressor 2 depending on the value of the duty cycle and the predetermined rule. According to the invention, the predetermined rule comprises a lower limit for the duty cycle. The control unit 8 is then configured to determine whether the duty cycle is less than the lower limit, and upon determining that the duty cycle is less than the lower limit, the control unit 8 is configured to determine speed control data indicating a speed of the rotary air compressor 2 that is lower than the preset regular operating speed of the rotary air compressor 2. For example, if the lower limit is 30% and the duty cycle was less than 30% during the last three succeeding vehicle running time periods then the control unit 8 will provide a control signal with speed control data indicating a reduce speed request to the electrical motor 4 and/or the transmission 15, and the compressor 2 will then run with lower speed (speed level 1) in order to compensate the low duty cycle. The speed level 1 is for example in the range of 1000 to 1500 rpm. The rotary air compressor 2 may not produce any compressed air when set with a lower speed, mainly heat may be produced. During experiments it has been discovered that using three succeeding duty cycles with a respective vehicle running time period of 10-15 minutes and a lower limit of the duty cycle of 30% is particularly beneficial for setting an accurate speed of the rotary air compressor 2 in order to avoid condensation.

According to some embodiments, the control unit 8 is configured to determine whether the duty cycle is above the lower limit and below an upper limit, or equal to any of the lower limit or upper limit, for the duty cycle. In other words, determining if the duty cycle is within or on an interval limited by the lower limit and the upper limit. Upon determining that the duty cycle is above the lower limit and below an upper limit, or equal to any of the lower limit or upper limit, the control unit 8 is configured to determine speed control data indicating the preset regular operating speed of the rotary air compressor 2. For example, if the lower limit of the duty cycle is 30% and the upper limit of the duty cycle is 80%, and the duty cycle is more than 30% and less than 80%, or equal to 30% or 80%, then the rotary air compressor 2 will continues at its nominal speed, thus the preset regular operating speed (speed level 2). Then the control unit 8 may provide a control signal with speed control data indicating a regular operating speed request to the electrical motor 4 and/or the transmission 15 and the compressor 2 will then run with the preset regular operating speed lower speed (speed level 2). The speed level 2 is for example in the range of 2000 to 3000 rpm, and is the most efficient working speed for the rotary air compressor 2.

According to some embodiments, the predetermined rule comprises the upper limit for the duty cycle, and wherein the control unit 8 is configured to determine whether the duty cycle is above the limit. Upon determining that the duty cycle is above the limit, the control unit 8 is configured to determine speed control data indicating a speed of the rotary air compressor 2 that is higher than a preset regular operating speed of the rotary air compressor 2. For example, if the upper limit is 80%, and the duty cycle is more than 80% during the last 15 minutes, then the control unit 8 is configured to provide a control signal comprising speed control data indicating a high-speed request (speed level 3) to the electrical motor 4 and/or the transmission 15 in order to increase the revolution speed of rotary air compressor 2 and decrease the duty cycle in order to enable the air system 14 to be in a regeneration mode. The rotary air compressor 2 will then be set to the speed level 3. The speed level 3 is for example in the range of 3000 to 4000 rpm.

According to some embodiments, the control unit 8 is configured to obtain an air consumption rate of the vehicle 1. The air consumption rate for a pneumatic system of the vehicle 1 is typically obtained through a measurement of an outflow rate from a tank 5, 6, 7. The outflow rate may be measured with a flow meter in an outlet pipe of the respective tank 5, 6, 7 or may be determined, i.e. calculated or estimated, based on an air system pressure of the respective tank 5, 6, 7. For example, the air consumption rate for an air system may be determined as:

$$air\ consumption\ rate = \frac{\Delta air\ system\ pressure \cdot air\ system\ volume}{\Delta time} \qquad (1)$$

where the $\Delta air\ system\ pressure$ is the change in air pressure (e.g. measure by a pressure sensor) during the time $\Delta time$, and the $air\ system\ volume$ is the total volume of the air system. The total air consumption rate of the vehicle 1 may be determined by adding up all the air consumption rates for the different pneumatical systems obtained during the same time $\Delta time$.

The control unit 8 is further configured to obtain a produced air rate of the air system 14, and is thus the amount of produced air from the rotary air processor 2. The produced air rate is typically obtained as a measurement of an inflow rate to the same tank 5, 6, 7. The inflow rate may be measured with a flow meter in the inlet pipe of the respective tank 5, 6, 7 or may be determined by calculating or estimating based on the rotational speed of electrical motor 4 and/or air compressor 2 (as it is known how much compressed air that is produced at a certain rotational speed). The control unit 8 is further configured to determine whether the air consumption rate of the vehicle 1 is higher than the produced air rate. Upon determining that the air consumption rate of the vehicle 1 is higher than the produced air rate, the control unit 8 is configured to determine speed control data indicating a speed of the rotary air compressor 2 that is higher than a preset regular operating speed of the rotary air compressor 2. It may however also be a prerequisite that the pressure in the tank 5, 6, 7 is below the lower limit. In other words, if the air consumption rate is higher than free air delivery rate, then the control unit 8 is configured to send speed control data indicating a high speed request (speed level 3) to the electric motor 4 and/or transmission 15 in order to increase the revolution speed of compressor 2 such that enough compressed air can be supplied to the tank 5, 6, 7.

The mentioned "speed level 1", "speed level 2" and "speed level 3" may be differently set, or may differ, for different kinds of vehicles. For example may a refuse collector truck that often use compressed air have a speed level 1 set to 1500 rpm, a speed level 2 set to 2700 rpm and a speed level 3 set to 4000 rpm. A long haulage truck that does not make use of so much compressed air may have a speed level 1 of 1100 rpm, a speed level 2 of 2000 rpm and a speed level 3 of 3300 rpm.

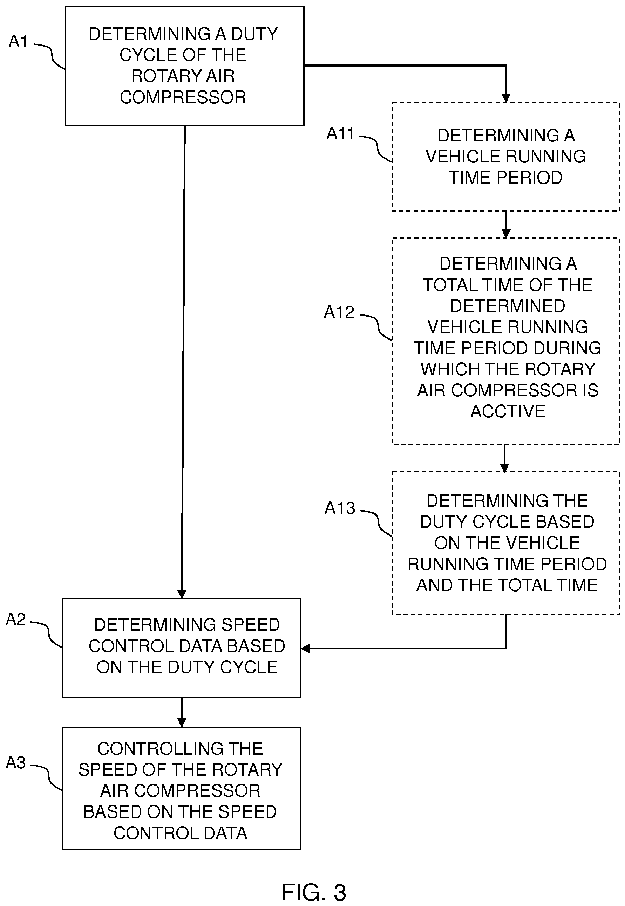

The disclosure also relates to a method for controlling speed of the electric motor driven rotary air compressor 2 comprised in the air system 14 of the vehicle 1. The method may be implemented as computer code and saved in the memory 12 as the program P. The method will now be explained with reference to the flowchart in Fig. 3. It should be understood that the method may be implemented by the above described control device 3 (Figs. 1-2), and used in conjunction with an air system 14 (Fig. 1-2) as previously described. The method comprises in a first step A1 determining a duty cycle of the rotary air compressor 2. The duty cycle may be readily available or may be determined as has been previously described, and will to some extent be explained in the following. The method comprises in another step A2 determining speed control data of the rotary air compressor 2 based on the determined duty cycle according to a predetermined rule. Examples of speed control data have been previously described, and the speed control data may e.g. be a speed of the rotary air compressor or electric motor 4 in rpm. The predetermined rule may be any or several of the previously described predetermined rules. The method comprises in a further step A3 controlling the speed of the rotary air compressor 2 based on the determined speed control data. The speed of the rotary air compressor 2 may be indirectly controlled via the electrical motor 4 and/or the transmission 15.

The step A1 of determining the duty cycle may comprise the following steps A11-A13: determining a vehicle running time period during which the vehicle 1 is running, determining a total time of the determined vehicle running time period during which the rotary air compressor 2 is active; and determining the duty cycle based on the vehicle running time period and the total time. By implementing a timer the time when the rotary air compressor 2 is active can be estimated by accumulating the times when the rotary air compressor 2 is active during the vehicle running time period, and thus determined the total time being the accumulated time. The vehicle running time may be determined e.g. obtained as has been previously described.

According to the invention, the predetermined rule comprises the lower limit for the duty cycle, and wherein the method comprises determining whether the duty cycle is less than the lower limit. Upon determining that the duty cycle is less than the lower limit, the method comprises determining speed control data indicating a speed of the rotary air compressor 2 that is lower than a preset regular operating speed of the rotary air compressor 2. Reference is here made to the previously mentioned examples of lower limits and speeds of the rotary air compressor 2 that are lower than the preset regular operating speed of the rotary air compressor 2.

According to some embodiments, the method comprises determining whether the duty cycle is above the lower limit and below an upper limit, or equal to any of the lower limit or upper limit. Upon determining that the duty cycle is above the lower limit and below an upper limit, or equal to any of the lower limit or upper limit, the method comprises determining speed control data indicating the preset regular operating speed of the rotary air compressor 2. Reference is here made to the previously mentioned examples of lower limits, upper limits and preset regular operating speed of the rotary air compressor 2.

According to some embodiments, the predetermined rule comprises the upper limit for the duty cycle, and wherein the method comprises determining whether the duty cycle is above the limit. Upon determining that the duty cycle is above the limit, the method comprises determining speed control data indicating a speed of the rotary air compressor 2 that is higher than the preset regular operating speed of the rotary air compressor 2. Reference is here made to the previously mentioned examples of upper limits and speeds of the rotary air compressor 2 that are higher than the preset regular operating speed of the rotary air compressor 2.

According to some embodiments, the method comprises determining whether the air consumption rate of the vehicle 1 is higher than the produced air rate of the air system 14. Upon determining that the air consumption rate of the vehicle 1 is higher than the produced air rate of the air system 14, the method comprises determining speed control data indicating a speed of the rotary air compressor 2 that is higher than the preset regular operating speed of the rotary air compressor 2. Reference is here made to the previously mentioned examples of speeds of the rotary air compressor 2 that are higher than the preset regular operating speed of the rotary air compressor 2.

The present invention is not limited to the above-described preferred embodiments. Various alternatives and modifications may be used. Therefore, the above embodiments should not be taken as limiting the scope of the invention, which is defined by the appending claims.

## Claims

1. A control device (3) for a rotary air compressor (2) of an air system (14) of a vehicle (1), wherein the rotary air compressor (2) is arranged to be driven by an electric motor (4), ch a r act e r i zed in that the control device (3) comprises a control unit (8) configured to:

   - determine a duty cycle of the rotary air compressor (2), wherein the duty cycle is indicative of a total time the rotary air compressor (2) is active during a vehicle running time period of the vehicle (1), divided by the vehicle running time period;
   - determine speed control data of the rotary air compressor (2) based on the determined duty cycle according to a predetermined rule, wherein the predetermined rule comprises a lower limit for the duty cycle, and the control unit (8) is configured to determine whether the duty cycle is less than the limit, and upon determining that the duty cycle is less than the limit, the control unit (8) is configured to determine speed control data indicating a speed of the rotary air compressor (2) that is lower than a preset regular operating speed of the rotary air compressor (2); and
   - control the speed of the rotary air compressor (2) based on the determined speed control data.

2. The control device (3) according to claim 1, wherein the control unit (8) is configured to:

   - obtain data indicating a vehicle running time period during which the vehicle (1) is running;
   - obtain data indicating a portion of the vehicle running time period during which the rotary air compressor (2) is active;
   - determine a total time of the vehicle running time period during which the rotary air compressor (2) is active based on the obtained data;
   - determine the duty cycle based on the vehicle running time period and the total time.

3. The control device (3) according to any of the any of the preceding claims, wherein the control unit (8) is configured to determine whether the duty cycle is above the lower limit and below an upper limit, or equal to any of the lower limit or upper limit, and upon determining that the duty cycle is above the lower limit and below an upper limit, or equal to any of the lower limit or upper limit, the control unit (8) is configured to determine speed control data indicating the preset regular operating speed of the rotary air compressor (2).

4. The control device (3) according to any of the any of the preceding claims, wherein the predetermined rule comprises an upper limit for the duty cycle, wherein the control unit (8) is configured to determine whether the duty cycle is above the limit, and upon determining that the duty cycle is above the limit, the control unit (8) is configured to determine speed control data indicating a speed of the rotary air compressor (2) that is higher than a preset regular operating speed of the rotary air compressor (2).

5. The control device (3) according to any of the any of the preceding claims, wherein the control unit (8) is configured to

- obtain an air consumption rate of the vehicle (1);
- obtain a produced air rate of the air system (14);
- determine whether the air consumption rate of the vehicle (1) is higher than the produced air rate, and upon determining that the air consumption rate of the vehicle (1) is higher than the produced air rate, the control unit (8) is configured to determine speed control data indicating a speed of the rotary air compressor (2) that is higher than a preset regular operating speed of the rotary air compressor (2).

6. A vehicle (1) comprising an air system (14) and a control device (3) according to any of the any of the preceding claims, wherein the control unit (8) is configured to control speed of an electric rotary air compressor (2) of the air system (14).

7. A method for controlling speed of an electric motor driven rotary air compressor (2) comprised in an air system (14) of a vehicle (1), the method comprising:

- determining a duty cycle of the rotary air compressor (2), wherein the duty cycle is indicative of a total time the rotary air compressor (2) is active during a vehicle running time period of the vehicle (1), divided by the vehicle running time period;
- determining speed control data of the rotary air compressor (2) based on the determined duty cycle according to a predetermined rule, and wherein the predetermined rule comprises a lower limit for the duty cycle, wherein the method comprises determining whether the duty cycle is less than the limit, and upon determining that the duty cycle is less than the limit, determining speed control data indicating a speed of the rotary air compressor (2) that is lower than a preset regular operating speed of the rotary air compressor (2)
- controlling the speed of the rotary air compressor (2) based on the determined speed control data.

8. The method according to claim 7, wherein the determining comprises:

- determining a vehicle running time period during which the vehicle (1) is running;
- determining a total time of the determined vehicle running time period during which the rotary air compressor (2) is active;
- determining the duty cycle based on the vehicle running time period and the total time.

9. The method according to any of the claims 7 and 8, comprising determining whether the duty cycle is above a lower limit and below an upper limit, or equal to any of the lower limit or upper limit, and upon determining that the duty cycle is above the lower limit and below an upper limit, or equal to any of the lower limit or upper limit, determining speed control data indicating the preset regular operating speed of the rotary air compressor (2).

10. The method according to any of the claims 8 to 11, wherein the predetermined rule comprises an upper limit for the duty cycle, wherein the method comprises determining whether the duty cycle is above the limit, and upon determining that the duty cycle is above the limit, determining speed control data indicating a speed of the rotary air compressor (2) that is higher than a preset regular operating speed of the rotary air compressor (2).

11. The method according to any of the claims 7 to 10, comprising determining whether an air consumption rate of the vehicle (1) is higher than a produced air rate of the air system (14), and upon determining that the air consumption rate of the vehicle (1) is higher than the produced air rate of the air system (14), determining speed control data indicating a speed of the rotary air compressor (2) that is higher than a preset regular operating speed of the rotary air compressor (2).

12. A computer program P, wherein the computer program P comprises a computer program code which, when executed by a control device (3), causes the control device (3) to perform the method according to any of claims 7 to 11.

13. A computer program product comprising a computer program code which, when executed by a control device (3), causes the control device (3) to perform the method steps according to any of the claims 7 to 11.

**Patentansprüche**

1. Steuervorrichtung (3) für einen Rotationsluftkompressor (2) eines Luftsystems (14) eines Fahrzeugs (1), wobei der Rotationsluftkompressor (2) angeordnet ist, um durch einen Elektromotor (4) angetrieben zu werden, **dadurch gekennzeichnet, dass** die Steuervorrichtung (3) eine Steuereinheit (8) umfasst, die konfiguriert ist:

   - einen Arbeitszyklus des Rotationsluftkompressors (2) zu bestimmen, wobei der Arbeitszyklus eine Gesamtzeit, in der der Rotationsluftkompressor (2) während einer Fahrzeugbetriebszeitperiode des Fahrzeugs (1) aktiv ist, geteilt durch die Fahrzeugbetriebszeitperiode anzeigt;
   - Drehzahlsteuerungsdaten des Rotationsluftkompressors (2) auf der Grundlage des bestimmten Arbeitszyklus gemäß einer vorbestimmten Regel zu bestimmen, wobei die vorbestimmte Regel eine untere Grenze für den Arbeitszyklus umfasst, und die Steuereinheit (8) konfiguriert ist, zu bestimmen, ob der Arbeitszyklus kleiner als die Grenze ist, und bei einer Bestimmungs, dass der Arbeitszyklus kleiner als die Grenze ist, die Steuereinheit (8) konfiguriert ist, Drehzahlsteuerungsdaten zu bestimmen, die eine Drehzahl des Rotationsluftkompressors (2) anzeigen, die niedriger ist als eine voreingestellte reguläre Betriebsdrehzahl des des Rotationsluftkompressors (2) ist; und
   - die Drehzahl des Rotationsluftkompressors (2) auf der Grundlage der bestimmten Drehzahlsteuerungsdaten zu steuern.

2. Steuervorrichtung (3) nach Anspruch 1, wobei die Steuereinheit (8) konfiguriert ist:

   - Daten zu erhalten, die eine Fahrzeugbetriebszeitperiode anzeigen, während der das Fahrzeug (1) fährt;
   - Daten zu erhalten, die einen Abschnitt der Fahrzeugbetriebszeitperiode anzeigen, während dem der Rotationsluftkompressor (2) aktiv ist;
   - eine Gesamtzeit der Fahrzeugbetriebszeitperiode, während der der Rotationsluftkompressor (2) aktiv ist, auf der Grundlage der erhaltenen Daten zu bestimmen;
   - den Arbeitszyklus auf der Grundlage der Fahrzeugbetriebszeitperiode und der Gesamtzeit zu bestimmen.

3. Steuervorrichtung (3) nach einem der vorhergehenden Ansprüche, wobei die Steuereinheit (8) konfiguriert ist, zu bestimmen, ob der Arbeitszyklus über der unteren Grenze und unter einer oberen Grenze liegt, oder gleich der unteren Grenze oder der oberen Grenze ist, und bei einer Bestimmung, dass der Arbeitszyklus über der unteren Grenze und unter der oberen Grenze liegt, oder gleich der unteren Grenze oder der oberen Grenze ist, die Steuereinheit (8) konfiguriert ist, Drehzahlsteuerungsdaten zu bestimmen, die die voreingestellte reguläre Betriebsdrehzahl des des Rotationsluftkompressors anzeigen.

4. Steuervorrichtung (3) nach einem der vorhergehenden Ansprüche, wobei die vorbestimmte Regel eine obere Grenze für den Arbeitszyklus umfasst, wobei die Steuereinheit (8) konfiguriert ist, zu bestimmen, ob der Arbeitszyklus über der Grenze liegt, und, bei einer Bestimmung, dass der Arbeitszyklus über der Grenze liegt, die Steuereinheit (8) konfiguriert ist, Drehzahlsteuerungsdaten zu bestimmen, die eine Drehzahl des Rotationsluftkompressors (2) anzeigen, die höher ist als eine voreingestellte reguläre Betriebsdrehzahl des Rotationsluftkompressors (2).

5. Steuervorrichtung (3) nach einem der vorhergehenden Ansprüche, wobei die Steuereinheit (8) konfiguriert ist:

   - eine Luftverbrauchsrate des Fahrzeugs (1) zu erhalten;
   - eine erzeugte Luftrate des Luftsystems (14) zu erhalten;
   - zu bestimmen, ob die Luftverbrauchsrate des Fahrzeugs (1) höher ist als die erzeugte Luftrate, und bei einer Bestimmungs, dass die Luftverbrauchsrate des Fahrzeugs (1) höher ist als die erzeugte Luftrate, die Steuereinheit (8) konfiguriert ist, Drehzahlsteuerungsdaten zu bestimmen, die eine Drehzahl des Rotationsluftkompressors (2) anzeigen, die höher ist als eine voreingestellte reguläre Betriebsdrehzahl des Rotationsluftkompressors (2).

**6.** Fahrzeug (1), das ein Luftsystem (14) und eine Steuervorrichtung (3) nach einem der vorhergehenden Ansprüche umfasst, wobei die Steuereinheit (8) konfiguriert ist, eine Drehzahl eines elektrischen Rotationsluftkompressors (2) des Luftsystems (14) zu steuern.

**7.** Verfahren zum Steuern einer Drehzahl eines von einem Elektromotor angetriebenen Rotationsluftkompressors (2), der in einem Luftsystem (14) eines Fahrzeugs (1) enthalten ist, wobei das Verfahren umfasst:

- Bestimmen eines Arbeitszyklus des Rotationsluftkompressors (2), wobei der Arbeitszyklus eine Gesamtzeit, in der der Rotationsluftkompressor (2) während einer Fahrzeugbetriebszeitperiode des Fahrzeugs (1) aktiv ist, geteilt durch die Fahrzeugbetriebszeitperiode anzeigt;
- Bestimmen von Drehzahlsteuerungsdaten des Rotationsluftkompressors (2) auf der Grundlage des bestimmten Arbeitszyklus gemäß einer vorbestimmten Regel, und wobei die vorbestimmte Regel eine untere Grenze für den Arbeitszyklus umfasst, wobei das
Verfahren das Bestimmen, ob der Arbeitszyklus kleiner als die Grenze ist, und, bei einer Bestimmung, dass der Arbeitszyklus kleiner als die Grenze ist, das Bestimmen von Drehzahlsteuerungsdaten umfasst, die eine Drehzahl des Rotationsluftkompressors (2) anzeigen, die niedriger ist als eine voreingestellte reguläre Betriebsdrehzahl des Rotationsluftkompressors (2);
- Steuern der Drehzahl des Rotationsluftkompressors (2) auf der Grundlage der bestimmten Drehzahlsteuerungsdaten.

**8.** Verfahren nach Anspruch 7, wobei das Bestimmen umfasst:

- Bestimmen einer Fahrzeugbetriebszeitperiode, während der das Fahrzeug (1) fährt;
- Bestimmen einer Gesamtzeit der bestimmten Fahrzeugbetriebszeitperiode, während der der Rotationsluftkompressor (2) aktiv ist;
- Bestimmen des Arbeitszyklus auf der Grundlage der Fahrzeugbetriebszeitperiode und der Gesamtzeit.

**9.** Verfahren nach einem der Ansprüche 7 und 8, das das Bestimmen, ob der Arbeitszyklus über einer unteren Grenze und unter einer oberen Grenze liegt, oder gleich der unteren Grenze oder der oberen Grenze ist, und bei einer Bestimmung, dass der Arbeitszyklus über der unteren Grenze und unter der oberen Grenze liegt, oder gleich der unteren Grenze oder der oberen Grenze ist, das Bestimmen von Geschwindigkeitssteuerungsdaten umfasst, die die voreingestellte reguläre Betriebsdrehzahl des Rotationsluftkompressors (2) anzeigen.

**10.** Verfahren nach einem der Ansprüche 8 bis 11, wobei die vorbestimmte Regel eine obere Grenze für den Arbeitszyklus umfasst, wobei das Verfahren das Bestimmen, ob der Arbeitszyklus über der Grenze liegt, und, bei einer Bestimmung, dass der Arbeitszyklus über der Grenze liegt, das Bestimmen von Drehzahlsteuerungsdaten umfasst, die eine Drehzahl des Rotationsluftkompressors (2) anzeigen, die höher ist als eine voreingestellte reguläre Betriebsdrehzahl des Rotationsluftkompressors (2).

**11.** Verfahren nach einem der Ansprüche 7 bis 10, das das Bestimmen, ob eine Luftverbrauchsrate des Fahrzeugs (1) höher ist als eine erzeugte Luftrate des Luftsystems (14), und, bei einer Bestimmungs, dass die Luftverbrauchsrate des Fahrzeugs (1) höher ist als die erzeugte Luftrate, das Bestimmen von Drehzahlsteuerungsdaten umfasst, die eine Drehzahl des Rotationsluftkompressors (2) anzeigen, die höher ist als eine voreingestellte reguläre Betriebsdrehzahl des Rotationsluftkompressors (2).

**12.** Computerprogramm P, wobei das Computerprogramm P einen Computerprogrammcode umfasst, der, wenn er von einer Steuervorrichtung (3) ausgeführt wird, die Steuervorrichtung (3) veranlasst, das Verfahren nach einem der Ansprüche 7 bis 11 auszuführen.

**13.** Computerprogrammprodukt, das einen Computerprogrammcode umfasst der, wenn er von einer Steuervorrichtung (3) ausgeführt wird, die Steuervorrichtung (3) veranlasst, die Verfahrensschritte nach einem der Ansprüche 7 bis 11 auszuführen.

**Revendications**

1. Dispositif de commande (3) pour un compresseur d'air rotatif (2) d'un système d'air (14) d'un véhicule (1), dans lequel le compresseur d'air rotatif (2) est agencé pour être entraîné par un moteur électrique (4), **caractérisé en ce que** le dispositif de commande (3) comprend une unité de commande (8) configurée pour :

    - déterminer un cycle de service du compresseur d'air rotatif (2), dans lequel le cycle de service est indicatif d'un temps total pendant lequel le compresseur d'air rotatif (2) est actif pendant une période de fonctionnement du véhicule (1), divisé par la période de fonctionnement du véhicule ;
    - déterminer des données de commande de vitesse du compresseur d'air rotatif (2) sur la base du cycle de service déterminé selon une règle prédéterminée, dans lequel la règle prédéterminée comprend une limite inférieure pour le cycle de service, et l'unité de commande (8) est configurée pour déterminer si le cycle de service est inférieur à la limite, et lorsqu'il est déterminé que le cycle de service est inférieur à la limite, l'unité de commande (8) est configurée pour déterminer des données de commande de vitesse indiquant une vitesse du compresseur d'air rotatif (2) qui est inférieure à une vitesse de fonctionnement régulière préétablie du compresseur d'air rotatif (2) ; et
    - commander la vitesse du compresseur d'air rotatif (2) sur la base des données de commande de vitesse déterminées.

2. Dispositif de commande (3) selon la revendication 1, dans lequel l'unité de commande (8) est configurée pour :

    - obtenir des données indiquant une période de fonctionnement du véhicule pendant laquelle le véhicule (1) fonctionne ;
    - obtenir des données indiquant une partie de la période de fonctionnement du véhicule pendant laquelle le compresseur d'air rotatif (2) est actif ;
    - déterminer un temps total de la période de fonctionnement du véhicule pendant laquelle le compresseur d'air rotatif (2) est actif sur la base des données obtenues ;
    - déterminer le cycle de service sur la base de la période de fonctionnement du véhicule et du temps total.

3. Dispositif de commande (3) selon l'une quelconque des revendications précédentes, dans lequel l'unité de commande (8) est configurée pour déterminer si le cycle de service est au-dessus de la limite inférieure et en dessous d'une limite supérieure, ou égale à l'une quelconque de la limite inférieure ou de la limite supérieure, et lorsqu'il est déterminé que le cycle de service est supérieur à la limite inférieure et inférieur à une limite supérieure, ou égale à l'une quelconque de la limite inférieure ou de la limite supérieure, l'unité de commande (8) est configurée pour déterminer des données de commande de vitesse indiquant la vitesse de fonctionnement régulière préétablie du compresseur d'air rotatif (2).

4. Dispositif de commande (3) selon l'une quelconque des revendications précédentes, dans lequel la règle prédéterminée comprend une limite supérieure pour le cycle de service, dans lequel l'unité de commande (8) est configurée pour déterminer si le cycle de service est au-dessus de la limite, et lorsqu'il est déterminé que le cycle de service est au-dessus de la limite, l'unité de commande (8) est configurée pour déterminer des données de commande de vitesse indiquant une vitesse du compresseur d'air rotatif (2) qui est supérieure à une vitesse de fonctionnement régulière préétablie du compresseur d'air rotatif (2).

5. Dispositif de commande (3) selon l'une quelconque des revendications précédentes, dans lequel l'unité de commande (8) est configurée pour

    - obtenir un débit de consommation d'air du véhicule (1) ;
    - obtenir un débit d'air produit du système d'air (14) ;
    - déterminer si le débit de consommation d'air du véhicule (1) est supérieur au débit d'air produit, et lorsqu'il est déterminé que le débit de consommation d'air du véhicule (1) est supérieur au débit d'air produit, l'unité de commande (8) est configurée pour déterminer des données de commande de vitesse indiquant une vitesse du compresseur d'air rotatif (2) qui est supérieure à une vitesse de fonctionnement régulière préétablie du compresseur d'air rotatif (2).

6. Véhicule (1) comprenant un système d'air (14) et un dispositif de commande (3) selon l'une quelconque des revendications précédentes, dans lequel l'unité de commande (8) est configurée pour commander la vitesse d'un compresseur d'air rotatif électrique (2) du système d'air (14).

**7.** Procédé pour commander la vitesse d'un compresseur d'air rotatif entraîné par un moteur électrique (2) compris dans un système d'air (14) d'un véhicule (1), le procédé comprenant :

- la détermination d'un cycle de service du compresseur d'air rotatif (2), dans lequel le cycle de service est indicatif d'un temps total pendant lequel le compresseur d'air rotatif (2) est actif pendant une période de fonctionnement du véhicule (1), divisé par la période de fonctionnement du véhicule ;
- la détermination de données de commande de vitesse du compresseur d'air rotatif (2) sur la base du cycle de service déterminé selon une règle prédéterminée, et dans lequel la règle prédéterminée comprend une limite inférieure pour le cycle de service, dans lequel le procédé comprend le fait de déterminer si le cycle de service est inférieur à la limite, et lorsqu'il est déterminé que le cycle de service est inférieur à la limite, la détermination de données de commande de vitesse indiquant une vitesse du compresseur d'air rotatif (2) qui est inférieure à une vitesse de fonctionnement régulière préétablie du compresseur d'air rotatif (2)
- la commande de la vitesse du compresseur d'air rotatif (2) sur la base des données de commande de vitesse déterminées.

**8.** Procédé selon la revendication 7, dans lequel la détermination comprend :

- la détermination d'une période de fonctionnement du véhicule pendant laquelle le véhicule (1) fonctionne ;
- la détermination d'un temps total de la période de fonctionnement prédéterminée du véhicule pendant laquelle le compresseur d'air rotatif (2) est actif ;
- la détermination du cycle de service sur la base de la période de fonctionnement du véhicule et du temps total.

**9.** Procédé selon l'une quelconque des revendications 7 et 8, comprenant le fait de déterminer si le cycle de service est au-dessus d'une limite inférieure et en dessous d'une limite supérieure, ou égale à l'une quelconque de la limite inférieure ou de la limite supérieure, et lorsqu'il est déterminé que le cycle de service est supérieur à la limite inférieure et inférieur à une limite supérieure, ou égale à l'une quelconque de la limite inférieure ou de la limite supérieure, la détermination de données de commande de vitesse indiquant la vitesse de fonctionnement régulière préétablie du compresseur d'air rotatif (2).

**10.** Procédé selon l'une quelconque des revendications 8 à 11, dans lequel la règle prédéterminée comprend une limite supérieure pour le rapport cyclique, dans lequel le procédé comprend le fait de déterminer si le cycle de service est supérieur à la limite, et lorsqu'il est déterminé que le cycle de service est supérieur à la limite, la détermination de données de commande de vitesse indiquant une vitesse du compresseur d'air rotatif (2) qui est supérieure à une vitesse de fonctionnement régulière préétablie du compresseur d'air rotatif (2).

**11.** Procédé selon l'une quelconque des revendications 7 à 10, comprenant le fait de déterminer si un débit de consommation d'air du véhicule (1) est supérieur à un débit d'air produit du système d'air (14), et lorsqu'il est déterminé que le débit de consommation d'air du véhicule (1) est supérieur au débit d'air produit du système d'air (14), la détermination de données de commande de vitesse indiquant une vitesse du compresseur d'air rotatif (2) qui est supérieure à une vitesse de fonctionnement régulière préétablie du compresseur d'air rotatif (2).

**12.** Programme d'ordinateur P, dans lequel ledit programme d'ordinateur P comprend un code de programme d'ordinateur qui, lorsqu'il est exécuté par un dispositif de commande (3), amène le dispositif de commande (3) à réaliser le procédé selon l'une quelconque des revendications 7 à 11.

**13.** Programme d'ordinateur comprenant un code de programme d'ordinateur qui, lorsqu'il est exécuté par un dispositif de commande (3), amène le dispositif de commande (3) à réaliser les étapes du procédé selon l'une quelconque des revendications 7 à 11.

FIG. 1

FIG. 2

A1 — DETERMINING A DUTY CYCLE OF THE ROTARY AIR COMPRESSOR

A11 — DETERMINING A VEHICLE RUNNING TIME PERIOD

A12 — DETERMINING A TOTAL TIME OF THE DETERMINED VEHICLE RUNNING TIME PERIOD DURING WHICH THE ROTARY AIR COMPRESSOR IS ACCTIVE

A13 — DETERMINING THE DUTY CYCLE BASED ON THE VEHICLE RUNNING TIME PERIOD AND THE TOTAL TIME

A2 — DETERMINING SPEED CONTROL DATA BASED ON THE DUTY CYCLE

A3 — CONTROLLING THE SPEED OF THE ROTARY AIR COMPRESSOR BASED ON THE SPEED CONTROL DATA

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3015328 A1
- EP 2708429 A1
- WO 2015082430 A1